(19) **Europäisches Patentamt European Patent Office Office européen des brevets**

(11) **EP 3 417 120 B1**

(12) **FASCICULE DE BREVET EUROPEEN**

(45) Date de publication et mention
de la délivrance du brevet:
**01.06.2022 Bulletin 2022/22**

(21) Numéro de dépôt: **17708854.9**

(22) Date de dépôt: **03.02.2017**

(51) Classification Internationale des Brevets (IPC):
*E04C 2/04* (2006.01)     *E04B 1/04* (2006.01)
*E04B 1/92* (2006.01)     *C04B 103/00* (2006.01)
*C04B 28/02* (2006.01)     *B32B 15/18* (2006.01)
*B32B 15/02* (2006.01)     *B32B 13/06* (2006.01)
*B32B 13/02* (2006.01)

(52) Classification Coopérative des Brevets (CPC):
(C-Sets disponibles)
**B32B 13/02; B32B 13/06; B32B 15/02;**
**B32B 15/18; C04B 28/02; E04B 1/04; E04C 2/044;**
B32B 2250/03; B32B 2250/40; B32B 2264/105;
B32B 2307/202; B32B 2307/212; B32B 2419/00;
B32B 2607/00; C04B 2111/94;              (Cont.)

(86) Numéro de dépôt international:
**PCT/FR2017/050244**

(87) Numéro de publication internationale:
**WO 2017/140966 (24.08.2017 Gazette 2017/34)**

(54) **ENSEMBLE ARCHITECTURE FORMANT UN BLINDAGE CONTRE LES RAYONNEMENTS ELECTROMAGNETIQUES**

ARCHITEKTONISCHE ANORDNUNG ZUM BILDEN EINER ABSCHIRMUNG GEGEN ELEKTROMAGNETISCHE STRAHLUNG

ARCHITECTURAL ASSEMBLY FORMING A SHIELD AGAINST ELECTROMAGNETIC RADIATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.02.2016 FR 1651289**

(43) Date de publication de la demande:
**26.12.2018 Bulletin 2018/52**

(73) Titulaires:
• **Spie Batignolles Genie Civil**
**92100 Boulogne-billancourt (FR)**
• **Lerau**
**93240 Stains (FR)**

(72) Inventeurs:
• **CARON-FELLENS, Jean-Paul**
**92210 Saint Cloud (FR)**
• **MARDIGUIAN, Michel**
**78470 Saint-Rémy Lès Chevreuse (FR)**

• **PITOUX, Thierry**
**94260 Fresnes (FR)**
• **SOULIAC, Guillaume**
**75003 Paris (FR)**

(74) Mandataire: **IP Trust**
**2, rue de Clichy**
**75009 Paris (FR)**

(56) Documents cités:
**EP-A1- 0 745 061        EP-B1- 0 745 061**
**WO-A1-2014/210007      JP-A- H01 302 897**
**US-A- 5 908 584**

(52) Classification Coopérative des Brevets (CPC):
(Cont.)
E04B 2001/925

C-Sets
**C04B 28/02, C04B 14/48**

**Description**

La présente invention concerne le domaine de la construction ou rénovation de bâtiments ou locaux dans lesquels se trouvent des personnes et/ou des équipements, et que l'on veut protéger contre les ondes électromagnétiques, tels que des centres de calcul ou de stockage de données, des entreprises, des bureaux, des hôpitaux, des logements. L'enveloppe extérieure de ces bâtiments est principalement constituée de béton, avec un traitement limitant la transmission des ondes électromagnétiques et formant une Protection Electro Magnétique (PEM). Cette protection peut prendre deux formes et être de deux sortes :

- Protection contre l'entrée d'ondes électromagnétiques dans un local ;
- Protection contre l'émission d'ondes électromagnétiques, du local vers l'extérieur.

Durant des décennies, la protection des locaux contre les champs radioélectriques n'était requise que pour des cas très particuliers: laboratoires de mesures spécialisées, locaux situés dans des sites militaires comportant des émetteurs puissants, certains locaux d'ambassades ou d'hôpitaux... etc

Depuis la fin des années 90, des besoins croissants sont apparus pour la protection radioélectrique de grands locaux ( > 30m2) voire de bâtiments entiers. Ils sont nés d'une meilleure connaissance des menaces que constituent les champs forts hautes fréquences, pour des sites aussi bien civils que militaires. En fait également partie la protection dite anti-compromission ou une parade à l'espionnage électromagnétique (« Tempest »).

A ces menaces déjà potentielles sont venues s'en ajouter d'autres: les armes radioélectriques modernes, générant des champs très forts ( > 1000V/m) sous forme d'impulsions ultra-brèves (ultra wide band pulses) ou d'un faisceau micro-ondes très concentré (Hi-Power MicroWaves). Les progrès technologiques ont rendu ces armes faciles à mettre en oeuvre par des belligérants classiques ou des terroristes.

**Etat de la technique**

On connaît dans l'état de la technique un premier mode de protection consistant à réaliser une cage de Faraday, qui enveloppe la pièce ou le bâtiment que l'on veut rendre étanches ou protéger des ondes électromagnétiques.

Lorsque l'enveloppe extérieure du local est principalement constituée de béton, la cage de Faraday est, dans la plupart des cas, un revêtement formé par une couche métallique qui est ajoutée aux parois du local que l'on veut protéger. Cette couche métallique, souvent constituée de cuivre, est relativement coûteuse.

Une deuxième solution consiste à incorporer dans le béton des charges métalliques pour augmenter le taux d'absorption du béton utilisé pour la construction de l'enceinte. Initialement, l'introduction de particules métalliques dans le béton vise principalement à modifier les caractéristiques de tenue mécanique du béton, comme cela est exposé dans l'article paru dans la revue « Béton[s]» du mois d'avril-mars 2013, sous le titre « Les fibres métalliques » de Frédéric Cluzicki.

Une troisième famille de solutions, correspondant à l'état de la technique le plus proche, consiste à combiner l'utilisation d'un couche métallique, notamment sous forme de grillage, avec l'utilisation de béton comportant des charges métalliques.

Par exemple, la demande de brevet internationale WO 2012114448 décrit un ouvrage en béton armé qui présente une fonction de protection contre les ondes électromagnétiques. La paroi en béton armé atténue les ondes électromagnétiques avec la fréquence à protéger qui se propagent de l'espace intérieur (R1) vers l'espace extérieur (R2). Elle est constituée par une section de béton dont le sens de la largeur coïncide avec la direction de propagation de l'espace intérieur vers l'espace extérieur, une grille d'armature métallique sur le côté intérieur de la section de béton, une grille d'armature arrière sur le côté espace extérieur, et un treillis métallique soudé qui est disposé entre la grille des fers d'armature avant et la grille des fers d'armature arrière.

Les distances entre les plans des fers d'armature et le treillis métallique soudé dans la direction de propagation sont dimensionnées pour devenir un multiple entier d'une longueur d'onde de la fréquence à protéger, et l'espacement dans la grille de fers d'armature avant et la grille de fers d'armature arrière est dimensionné de façon à devenir 3 fois plus large que l'espacement dans le treillis métallique soudé.

Cette solution est adaptée à la protection d'un rayonnement d'une longueur d'onde spécifique et ne permet pas d'assurer une protection « large bande ».

Le brevet chinois CN 103903665 concerne un mortier de ciment à large bande blindage/absorbant associé à un treillis métallique assurant une protection contre les rayonnements électromagnétique micro-ondes. Le treillis métallique est noyé dans le mortier de ciment.

Le brevet japonais JPH01302897 décrit une autre solution de structure qui peut arrêter les ondes radio.

Il propose l'utilisation de matériaux en forme de grille similaire dont la conductivité est élevée, connectés et installés à l'intérieur du béton chargé d'un élément conducteur particuleux, pulvérulent ou granulaire mélangé avec du béton avec un rapport en volume de 1 à 3%.

Le panneau de blindage est formé par l'addition de particules d'acier ou similaire dans un béton ordinaire. Les matériaux d'âme tels que des tiges ou grilles en fer ou analogues sont noyés dans le béton. Des éléments de cadre composés de cornières ou similaire sont prévus à une partie de bord périphérique. Les panneaux individuels sont liés, tandis que les éléments de cadre sont assemblés à l'aide de boulons d'accouplement ou analogue.

La demande de brevet internationale WO2014/210007 décrit un autre exemple de solution de l'art antérieur, où le treillis métallique est noyé à l'intérieur d'un volume de béton chargé de fibres métalliques. Le paragraphe [0006] de la demande de brevet susvisée précise « *concrete structure formed using conductive concrete mixture and conductive screens.* » et le [0019] précise « The conductive concrete mixture also includes one or more conductive materials configured to furnish electrical conductivity to the concrete. The conductive material serves to provide EMP shielding and reflect and absorb, for instance, EM waves propagating through the conductive concrete mixture. For example, the conductive concrete mixture may include at least substantially uniformly distributed conductive materials, which may include metallic and possibly non-metallic conductive materials, such as métal and/or carbon fibers. ».

Une autre solution similaire est proposée par le brevet japonais JPH05222785, concernant l'exécution de blindage sur une large bande allant d'une faible bande de fréquence à une bande haute fréquence et de réduire les travaux pour les opérations de blindage.

Le blindage est assuré par un élément de protection électromagnétique en cours d'installation dans une partie d'une paroi conductrice de béton.

Le béton est constitué d'un mélange avec une particule de carbone ou similaire, et un treillis métallique est incorporé dans le béton conducteur pour réaliser une liaison électrique entre l'élément de blindage électromagnétique et le béton conducteur.

On connaît encore dans l'état de la technique le brevet américain US5908584 décrit un matériau électriquement conducteur pour le blindage contre les ondes électromagnétiques et comprenant un liant, un mélange de graphite et carbone amorphe et du sable. Le document US5908584 divulgue les caractéristiques du préambule de la revendication 1.

On connaît encore la demande de brevet européen EP0745061 décrivant un composition à base de ciment présentant à la fois une bonne conductivité électrique et une résistance mécanique, avec une dispersion d'une phase conductrice au sein de la composition.

Les gammes de contenu larges de la composition conductrice sont les suivants: un liant à base de ciment, une phase conductrice constituée d'un ou plusieurs des éléments suivants: des fibres conductrices dans la quantité de 0 à 15% en volume de la composition; des particules conductrices dans la quantité de 0 à 80% en volume de la composition; l'eau, le rapport en poids par rapport au liant de ciment de 0,2 à 0,75, des agrégats fins dans le rapport en poids par rapport au liant de ciment de 0,0 à 2,0, et des agrégats grossiers à un rapport pondéral par rapport au liant de ciment de 0,0 à 2,0, des additifs classiques ou des mélanges et éventuellement un agent dispersant.

## Inconvénients de l'art antérieur

Lorsqu'il s'agit de blinder des locaux de grandes dimensions, les solutions de type cage de Faraday par habillage hermétique des six faces en tôle d'acier ou de cuivre deviennent très coûteuses en matériaux et en main-d'oeuvre, d'autant qu'elles viennent s'appliquer en second-oeuvre, une fois le bâtiment principal hors sol. Par ailleurs, le local protégé comporte toujours des passages pour les personnes et souvent pour des fluides (eau, air, courants forts, courants faibles...).

Les solutions de la troisième famille consistant à noyer une grille métallique dans un béton chargé de particules sont compliquées à mettre en œuvre : le béton est chargé de couches dont la densité augmente graduellement dans l'épaisseur de la paroi. Par ailleurs, ces solutions sont basées sur l'absorption partielle des ondes électromagnétiques par le béton chargé de particules conductrices augmentées par la réflexion sur le treillis métallique noyé dans ce béton chargé.

L'absorption n'a toutefois qu'une efficacité limitée pour des parois de faible épaisseur, et le treillis noyé au cœur du béton a moins d'efficacité que sa pose en surface.

## Solution apportée par l'invention

La solution objet de la présente invention permet d'obtenir dès la construction, avec des techniques qui alourdissent peu les méthodes traditionnelles, un bâtiment dont tout ou partie possède des performances de blindage largement suffisantes pour les besoins évoqués précédemment.

Par ailleurs, l'invention propose une solution dont le principe est basé non pas sur la seule absorption des ondes électromagnétiques mais aussi sur une réflexion optimale des ondes grâce à une désadaptation d'impédance abrupte à l'interface air/paroi.

Le problème technique que l'invention a permis de résoudre est l'amélioration de l'efficacité du blindage, par rapport aux solutions mentionnées dans l'état de l'art, prévoyant de noyer un treillis métallique au cœur d'un béton, éventuellement chargé de particules conductrices.

A cet effet, l'invention concerne selon son acception la plus générale un ensemble architecturé selon la revendication 1 composé d'éléments de paroi en béton chargé de particules conductrices avec un treillis conducteur formant un blindage contre les rayonnements électromagnétiques, caractérisé en ce que lesdits éléments de paroi sont constitués par un panneau de béton chargé de particules conductrices dépourvu de treillis conducteur, dont au moins une des faces est pourvue d'une peau comprenant un treillis conducteur présentant des mailles de moins de 30 x 30 millimètres.

Selon une première variante, ledit treillis conducteur est fixé sur l'une au moins des surfaces dudit panneau de béton chargé de particules conductrices.

Selon une deuxième variante, ledit treillis conducteur est noyé dans un matériau de finition.

De préférence, le béton contient entre 0,5 et 2% en poids de particules conductrices.

Avantageusement, le béton présente une résistivité inférieure 300 Ohm.mètre correspondant à la résistivité d'un béton standard.

De préférence, le béton est chargé avec des particules conductrices présentant une longueur comprise entre 5 et 15 millimètres et une section comprise entre 0,1 et 0,5 millimètres.

Selon une variante préférée, les ouvertures sont entourées par un fourreau conducteur en tôle avec un bord plié rabattu sur le treillis métallique.

Selon un mode de mise en œuvre préféré, lesdits fourreaux sont solidarisés avec la paroi par des vis engagées dans des trous taraudés pour assurer la liaison mécanique et électrique avec le treillis et le béton chargé de particules conductrices.

Avantageusement, lesdits éléments de paroi sont reliés par des joints de dilatation en un matériau conducteur, solidarisés avec les zones périphériques des deux éléments reliés par des vis engagées dans des trous taraudés pour assurer la liaison mécanique et électrique avec le treillis et le béton chargé de particules conductrices.

L'invention concerne aussi un procédé de construction d'un ensemble architecturé selon la revendication 10 composé d'éléments de paroi en béton chargé de particules conductrices avec un treillis conducteur formant un blindage contre les rayonnements électromagnétiques, caractérisé en ce que l'on dépose sur au moins une des faces d'un élément de paroi réalisé en béton chargé de particules conductrices dépourvu de treillis conducteur une peau comprenant un treillis conducteur présentant des mailles de moins de 30 x 30 millimètres.

Avantageusement, ladite peau est constituée par un treillis noyé ou non dans un matériau de finition.

## Description détaillée d'un exemple non limitatif de l'invention

La présente invention sera mieux comprise à la lecture de la description détaillée d'un exemple non limitatif de l'invention qui suit, se référant aux dessins annexés où :

- la figure 1 représente une vue en coupe d'un élément de panneau selon l'invention
- la figure 2 représente les courbes d'atténuation calculées par absorption d'un béton de 0,50m d'épaisseur. Courbe (A): béton ordinaire, (B) avec ajout de fibres acier
- la figure 3 représente les courbes d'atténuation d'une seule couche de grillage acier, soudé aux intersections (A) grillage 50mm, (B) grillage 5mm
- la figure 4 représente les courbes d'atténuation obtenues en combinant une couche de grillage acier, 5mm et un mur béton fibré de 0,50m
- la figure 5 représente une vue en coupe d'une ouverture pratiquée dans un panneau
- la figure 6 représente une vue en coupe de la liaison entre deux panneaux.

L'invention a pour objet la construction d'un bâtiment limitant la propagation des ondes électromagnétiques dans une bande de fréquences étendue, de l'intérieur vers l'extérieur et/ou de l'extérieur vers l'intérieur.

Structure d'un panneau

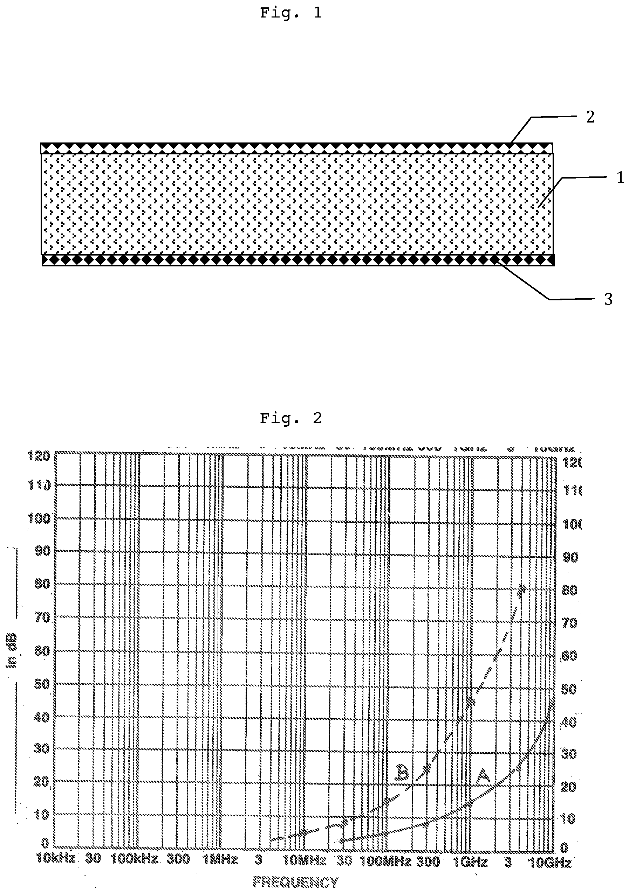

La figure 1 représente une vue en coupe d'un exemple de réalisation d'un élément de panneau selon l'invention.

Il est constitué par un panneau 1 en béton chargé de particules conductrices. Dans l'exemple décrit, ces particules sont constituées de fibres métalliques d'une longueur 13 mm et d'une section de 0,2 millimètres. La concentration est de 20 kg par mètre carré de béton. Le panneau 1 présente une épaisseur de 35 centimètres. Il est dépourvu de treillis métallique de blindage électromagnétique. Cela n'exclut pas la présence de ferraillages métalliques ou de barres d'armature pour la réalisation de béton armé. Par contre, le panneau 1 ne comporte pas de treillis de mailles de petite dimension, de moins de 70 millimètres de coté.

Dans l'exemple décrit, le panneau 1 est revêtu d'une peau intérieure 2 et d'une peau extérieure 3. L'épaisseur de cette peau est dans l'exemple décrit de 20 millimètres.

L'épaisseur du panneau 1 est supérieure à 80% de l'épaisseur totale de l'élément de panneau, chaque peau 2, 3 présentant une épaisseur inférieure à 10% de l'épaisseur du panneau 1.

Ces peaux 2, 3 contiennent un treillis conducteur.

On entend par « treillis » un ensemble bidimensionnel de conducteurs avec une continuité électrique de la conduction aux intersections des conducteurs entrecroisés. Ce treillis peut aussi être constitué par une toile métallique rapportée par rivetage ou agrafage sur le panneau en béton chargé de particules conductrices.

Il peut aussi être incorporé dans un matériau de finition ou une couche de béton déposée sur le panneau 1.

Fonctionnement de l'invention

La performance d'un volume blindé se mesure par le rapport entre le champ dans la zone concernée en l'absence de blindage, et le champ qui subsiste une fois le blindage réalisé. Soit, exprimé en décibels:

$$\texttt{Eff.(dB) = 20.log [E1 (Volt/m) / E2 (Volt/m)]}$$

On parle parfois plus simplement de l'atténuation entre le champ "dehors" et le champ "dedans", bien que cette formulation ne soit pas rigoureuse.

Pour obtenir cette atténuation, la paroi doit être en matériau conducteur, de nature et d'épaisseur suffisantes pour le besoin exprimé.

Propriétés intrinsèques des matériaux utilisés par l'invention

Le béton, dans les proportions usuelles ciment/sable est un médiocre conducteur. Néanmoins, en épaisseur suffisante le phénomène d'effet de peau fait qu'à partir d'une certaine fréquence les ondes électromagnétiques pénètrent de moins en moins dans l'épaisseur de la paroi: le béton commence à les absorber. La figure 2 montre l'atténuation calculée par absorption d'un béton de 0,50 m d'épaisseur. Courbe (A): béton ordinaire, (B) avec ajout de fibres acier pour un mur de béton homogène de 0,50m (résistivité $300\Omega.m$).

Si l'on charge le béton avec des fibres d'acier en proportion convenable, la résistivité peut descendre à $30\Omega.m$. Avec une charge conductrice de faible concentration, le béton qui était quasi-transparent aux ondes radio jusqu'à $\approx$ 100MHz commence à offrir une atténuation substantielle (courbe B, 15dB) à cette même fréquence et devient de plus en plus performant au-delà.

La seule charge conductrice ne permet toutefois pas d'apporter des performances satisfaisantes aux fréquences basses, inférieures à 100 MHz correspondant à des transmissions radio en ondes ultra-courtes ou métriques.

A l'inverse du béton, un grillage métallique oppose une interface très conductrice à l'onde électromagnétique incidente. Celle-ci se réfléchit fortement, à cause du changement brusque d'impédance, de façon analogue à la réflexion en optique. Cependant quand la fréquence augmente, l'efficacité du grillage diminue car la longueur d'onde du champ incident se rétrécit et se rapproche de la dimension de la maille. Lorsque cette maille équivaut à une demi-longueur d'onde, le grillage se comporte comme une antenne parfaitement accordée et laisse passer la totalité du champ. Au-delà, il restera quasi transparent (Figure 2).

L'invention repose sur le principe général d'une combinaison entre un béton fibré et un grillage conducteur.

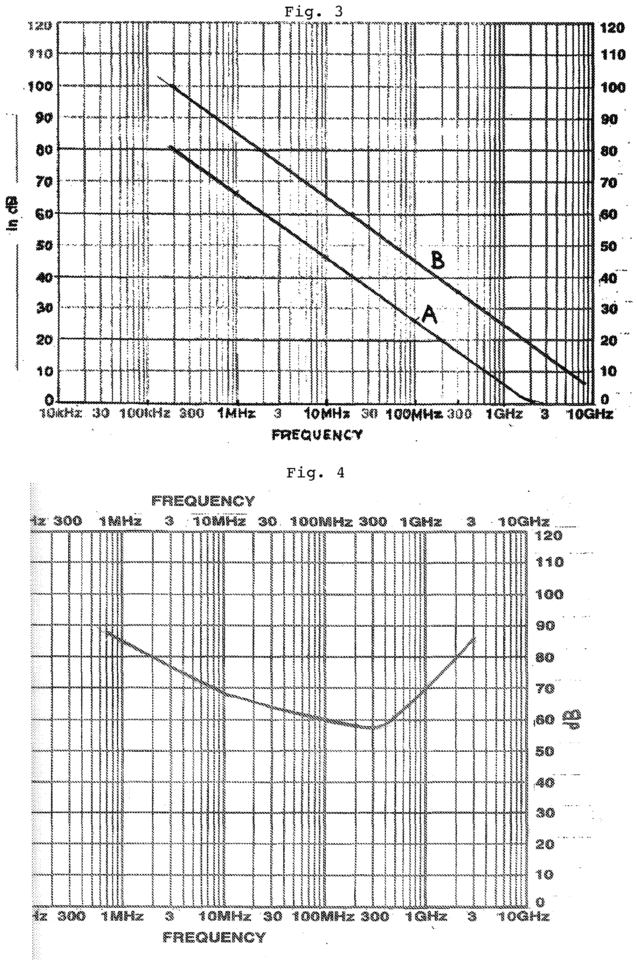

Les figures 3 et 4 représentent le taux d'atténuation d'une seule couche de grillage acier, soudé aux intersections (A) grillage 50mm, (B) grillage 5mm (Figure 3) et le taux d'atténuation obtenu en combinant une couche de grillage acier, 5mm et un mur béton fibré de 0,50m (Figure 4).

En associant au mieux les propriétés du béton fibré, absorbant en HF, et celle d'un treillis efficace en basses fréquences mais perdant progressivement cet avantage quand la fréquence augmente, on peut construire des locaux dont les parois atténueront suffisamment les champs électromagnétiques dans une très large plage de fréquences. On voit (Figure 3) que la combinaison d'un treillis de maille 5mmm avec un béton fibré de 0,50m garantit au moins 60dB depuis 1MHz jusqu'à > 10GHz.

Dans la partie gauche de la courbe, c'est le treillis qui fournit essentiellement l'atténuation, le béton chargé prenant le relais à partir de 150MHz.

Dans les solutions de l'art antérieur où un grillage noyé dans le béton les performances restent insuffisantes. L'invention consistant à former sur un panneau chargé de particules conductrices dépourvu de treillis conducteur, et à déposer sur ce panneau un treillis conducteur, permet d'améliorer significativement les performances.

Si le grillage est noyé dans l'épaisseur, la désadaptation entre le champ incident et l'impédance du treillis est moins favorable. Le calcul montre qu'un béton fibré de résistivité $30\Omega.m$ commence à participer au blindage vers 50-100MHz; il a alors atteint son impédance caractéristique Zc d'environ $100\Omega$. Si le treillis est noyé, le champ qui le frappe n'est donc plus un champ dans l'air (avec Zc = 377Ω) mais un champ dans un milieu légèrement conducteur. Il s'ensuit que la perte par réflexion du champ sur le treillis n'est plus proportionnelle à Zc (air) / Ztreillis, mais à Zc (béton) / Z(treillis). Cette transition moins abrupte fait perdre un facteur 4 à l'atténuation escomptée du treillis.

Au contraire, si, comme proposé par l'invention, le treillis est en surface, le premier interface air-treillis est fortement désadapté et la perte par réflexion est maximum. Cet avantage est particulièrement crucial si les sources de champ rayonné que l'on veut atténuer sont proches (par ex. moins de quelques mètres) de la paroi. Or c'est exactement le cas si le blindage du local doit assurer l'anti compromission (protection contre l'espionnage électromagnétique). L'atténuation d'un treillis en champ magnétique proche n'est alors plus aussi bonne que vis-à-vis de sources lointaines. Il est donc primordial dans ces applications de maintenir la meilleure performance possible du treillis.

Avec un treillis noyé dans le béton, comme proposé dans l'art antérieur, la coulée d'un mur en plusieurs fois, ou l'assemblage de plusieurs panneaux préfabriqués pose le délicat problème de la reprise bord-à-bord sur les 4 côtés, sans discontinuité électrique, des éléments de grillage. Toute discontinuité (par exemple de simples agrafages de place en place) ruine l'efficacité du treillis en créant une fente longue, donc une fuite. Au contraire la pose du treillis en surface avec contact continu métal-métal se fait facilement par des lés à recouvrement, comme un papier mural.

Pour obtenir un "béton intelligent", dont les caractéristiques peuvent être ajustées à l'avance pour des performances données, l'invention consiste à agir sur trois paramètres aisément maitrisés:

- épaisseur du béton,
- proportion de particules conductrices,
- nature de ces particules,
- dimension de la maille du treillis.

La pose du treillis en surface permet une grande facilité pour adapter les éléments en traversée :

- gaines de ventilation,
- traversées de câbles et conduits de fluide,
- chambranles de portes et vitres blindées etc ..

Traitement des ouvertures et des jonctions

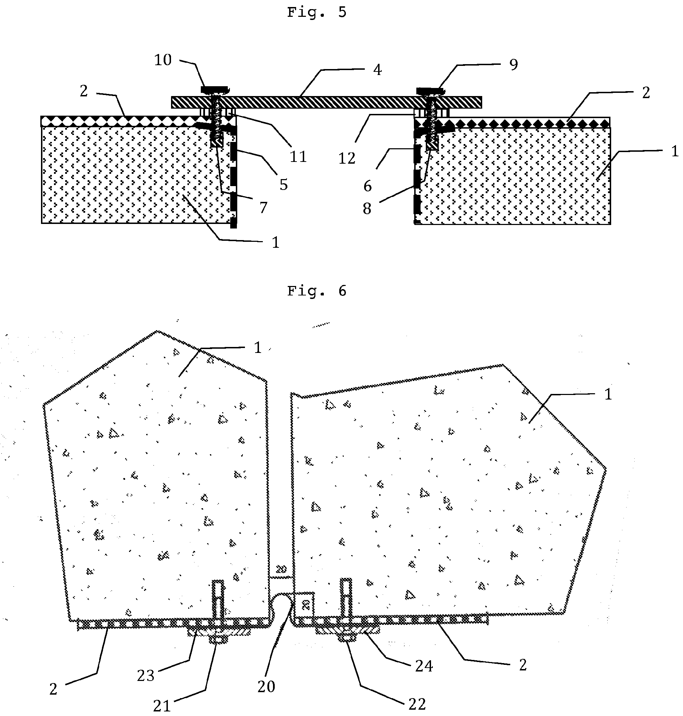

Dans la réalisation d'un bâtiment, il ne suffit pas de traiter les éléments de paroi, mais il est aussi nécessaire de limiter la transmission des ondes électromagnétiques au niveau des ouvertures, ainsi qu'au niveau des jonctions des panneaux. La figure 5 représente une vue schématique d'une ouverture.

Les ouvertures concernent notamment les portes, fenêtres, passages de conduits, câbles et tubes de fluides, les grilles de ventilation, etc.

L'élément de fermeture 4, par exemple un panneau de traversée, est fixé sur la périphérie de l'ouverture pratiquée dans le panneau.

Un fourreau conducteur 5, 6 est déposé sur la tranche de chacun des éléments de panneau. Ce fourreau 5, 6 est constitué par une tôle métallique d'une épaisseur supérieure ou égale à 0.5 millimètres.

Les parois en béton chargé de particules conductrices 1 présentent un trou dans lequel est logé une cheville métallique 7, 8.

Les vis 9, 10 assurent la liaison électrique et mécanique de l'élément de fermeture 4 via les chevilles 7, 8 avec le fourreau 5, 6 et le treillis 2. Un joint conducteur 11, 12 est inséré entre le fourreau 5, 6 et l'élément de fermeture 4.

La figure 6 représente une vue en coupe d'une jonction de deux éléments de panneau. Un feuillard métallique 20 constitué par une tôle conductrice fine présentant une section en oméga est fixé par des vis ou des clous à béton 21, 22 et des bandes d'acier 23, 24.

Ce feuillard métallique 20 permet par ailleurs au blindage de suivre les variations de l'écartement du joint de dilatation entre les deux éléments de panneau.

Pour des angles d'incidence obliques, l'onde électromagnétique peut au niveau des ouvertures dans le panneau béton+treillis ne rencontrer que peu d'épaisseur de béton, voire pas du tout.

Le treillis conducteur ne pouvant assurer seul la protection en hautes fréquences, il est nécessaire "d'habiller" la tranche de l'ouverture avec un revêtement conducteur d'atténuation au moins égale à celle de l'épaisseur du béton chargé choisi. Ce "fourreau" peut être réalisé en tôle, feuillard, tissu métallisé ou encore en peinture conductrice; un retour à 90 degrés doit assurer la continuité avec le treillis.

Performance observées dans un environnement sévère

Les caractéristiques de la paroi sont les suivantes :

- Résistivité béton fibré ≤ 30 Ω.m ( ordre de grandeur du mélange type "Alluets")
- Constante diélectrique: 10
- soit une impédance caractéristique de paroi ≈ 120Ω , constant pour ≥100MHz
- Treillis maille acier: maille 5 x 5mm

Performances visées (application de la norme CEI 61000 intitulée Compatibilité électromagnétique (CEM)):

- Effets des impulsions électromagnétiques à haute altitude (IEM-HA): 50kV/m crête. Tr: 2,5ns, durée 50%: 25ns
- Champ de rayonnement à haute intensité (HIRF): jusqu'à 10kV/m crête, 30MHz à 5GHz
- atténuation ≥ 50dB sur tout le spectre 0,1MHz à au moins 5 GHz

Avec cette atténuation, les champs résiduels seront:

- IEMN ≤ impulsion160V/m cr
- HIRF ≤ 33V/m

Avec cette atténuation, les champs résiduels sont:

- Effets des impulsions électromagnétiques à haute altitude (IEM-HA) ≤ impulsion160V/m crête
- HIRF ≤ 33V/m

De telles valeurs n'amènent aucun risque de dommage ou dysfonctionnement grave pour des équipements qui seraient au moins conformes à la Directive Européenne CEM, catégorie sévérité Industrielle.

Résultats

| F (MHz) | 0,1 | 1 | 10 | 30 | 100 | 300 | 1000 | 3000 |
|---|---|---|---|---|---|---|---|---|
| Profondeur de peau béton d(m) | 8,5 | 2,7 | 0,85 | 0,5 | 0,27 | 0,16 | 0,085 | 0,05 |
| Absorption pour 0,50m (dB) | 0,5 | 1,6 | 5,1 | 8,7 | 16 | 27 | 51 | 87 |
| Absorption pour 1m (dB) | 1 | 3,2 | 10 | 17,4 | 32 | 54 | 102 | 174 |
| Treillis 5 x 5mm (dB) | 96 | 76 | 56 | 46 | 36 | 26 | 16 | 6 |
| Atténuation Globale (dB) avec paroi de 0,50m: | 96,5 | 77,5 | 61 | 54,7 | 52 | 53 | 67 | 93 |
| avec paroi de 1 mètre | 97 | 79 | 66 | 63,4 | 68 | 80 | 118 | 180 |

L'atténuation du mur se combinera avec celle des éléments secondaires (portes, ventilation, etc) qui doivent eux aussi satisfaire l'exigence > 50dB

La pose du grillage en surface au lieu d'être noyé au coeur du béton fait gagner 6dB par une meilleure désadaptation d'impédance champ/grillage.

**Revendications**

1. - Ensemble architecturé composé d'éléments de paroi en béton chargé de particules conductrices avec un treillis conducteur formant un blindage contre les rayonnements électromagnétiques, où lesdits éléments de paroi sont constitués par un panneau 1 de béton chargé de particules conductrices dépourvu de treillis conducteur de blindage électromagnétique, **caractérisé en ce qu'**au moins une des faces est pourvue d'une peau 2, 3 constituée par un treillis conducteur de blindage électromagnétique noyé ou non dans un matériau de finition, ledit treillis conducteur présentant des mailles de moins de 30 x 30 millimètres.

2. - Ensemble architecturé selon la revendication 1 **caractérisé en ce que** ledit treillis conducteur est fixé sur l'une au moins des surfaces dudit panneau 1 de béton chargé de particules conductrices.

**3.** - Ensemble architecturé selon la revendication 1 **caractérisé en ce que** ledit treillis conducteur est noyé dans un matériau de finition.

**4.** - Ensemble architecturé selon la revendication 1 **caractérisé en ce que** le béton contient entre 0,5 et 2% en poids de particules conductrices.

**5.** - Ensemble architecturé selon la revendication 1 **caractérisé en ce que** le béton présente une résistivité inférieure à 300 Ohm.mètre.

**6.** - Ensemble architecturé selon la revendication 1 **caractérisé en ce que** le béton est chargé avec des particules conductrices présentant une longueur comprise entre 5 et 15 millimètres et une section comprise entre 0,1 et 0,5 millimètres.

**7.** - Ensemble architecturé selon la revendication 1 **caractérisé en ce que** les ouvertures du panneau 1 sont entourées par un fourreau conducteur métallique.

**8.** - Ensemble architecturé selon la revendication précédente **caractérisé en ce que** lesdits fourreaux sont solidarisés avec la paroi par des vis engagées dans des trous taraudés pour assurer la liaison mécanique et électrique avec le treillis et le béton chargé de particules conductrices.

**9.** - Ensemble architecturé selon la revendication 1 **caractérisé en ce que** lesdits éléments de paroi sont reliés par des joints de dilatation en un matériau conducteur, solidarisés avec les zones périphériques des deux éléments reliés par des vis ou des clous à béton pour assurer la liaison mécanique et électrique avec le treillis et le béton chargé de particules conductrices.

**10.** - Procédé de construction d'un ensemble architecturé selon l'une des revendications 1 à 9 composé d'éléments de paroi en béton chargé de particules conductrices avec un treillis conducteur formant un blindage contre les rayonnements électromagnétiques, **caractérisé en ce que** l'on dépose sur au moins une des faces d'un élément de paroi réalisé en béton chargé de particules conductrice dépourvu de treillis conducteur une peau comprenant un treillis conducteur présentant des mailles de moins de 30 x 30 millimètres.

**11.** - Procédé de construction d'un ensemble architecturé selon la revendication précédente, **caractérisé en ce que** ladite peau est constituée par un treillis noyé dans un matériau de finition.

**Patentansprüche**

**1.** Bauanordnung, die aus Wandelementen aus mit leitfähigen Teilchen geladenem Beton mit einem leitfähigen Gitter aufgebaut ist, das eine Abschirmung gegen elektromagnetische Strahlung ausbildet, wobei die Wandelemente aus einer Platte 1 aus mit leitfähigen Teilchen geladenem Beton ohne leitfähiges Gitter für die elektromagnetische Abschirmung bestehen, **dadurch gekennzeichnet, dass** wenigstens eine der Flächen mit einer Außenschicht 2, 3 versehen ist, die aus einem leitfähigen Gitter für die elektromagnetische Abschirmung besteht, das in ein Oberflächenmaterial eingebettet ist oder nicht, wobei das leitfähige Gitter Maschen von weniger als 30 x 30 Millimeter aufweist.

**2.** Bauanordnung nach Anspruch 1, **dadurch gekennzeichnet, dass** das leitfähige Gitter auf wenigstens einer der Oberflächen der Platte 1 aus mit leitfähigen Teilchen geladenem Beton befestigt ist.

**3.** Bauanordnung nach Anspruch 1, **dadurch gekennzeichnet, dass** das leitfähige Gitter in ein Oberflächenmaterial eingebettet ist.

**4.** Bauanordnung nach Anspruch 1, **dadurch gekennzeichnet, dass** der Beton zwischen 0,5 und 2 Gew.-% leitfähige Teilchen enthält.

**5.** Bauanordnung nach Anspruch 1, **dadurch gekennzeichnet, dass** der Beton einen spezifischen Widerstand von weniger als 300 Ohmmeter aufweist.

**6.** Bauanordnung nach Anspruch 1, **dadurch gekennzeichnet, dass** der Beton mit leitfähigen Teilchen geladen ist, die eine Länge zwischen 5 und 15 Millimeter und einen Querschnitt zwischen 0,1 und 0,5 Millimeter aufweisen.

7. Bauanordnung nach Anspruch 1, **dadurch gekennzeichnet, dass** die Öffnungen der Platte 1 durch eine metallische leitfähige Hülse umgeben sind.

8. Bauanordnung nach dem vorhergehenden Anspruch, **dadurch gekennzeichnet, dass** die Hülsen mit der Wand durch Schrauben fest verbunden sind, die zum Sicherstellen der mechanischen und elektrischen Verknüpfung mit dem Gitter und dem mit leitfähigen Teilchen geladenen Beton in Gewindebohrungen eingreifen.

9. Bauanordnung nach Anspruch 1, **dadurch gekennzeichnet, dass** die Wandelemente durch Dehnungsfugen aus einem leitfähigen Material verbunden sind, die zum Sicherstellen der mechanischen und elektrischen Verknüpfung mit dem Gitter und dem mit leitfähigen Teilchen geladenen Beton mit den Randzonen der zwei verbundenen Elemente durch Schrauben oder Betonnägel fest verbunden sind.

10. Verfahren zum Herstellen einer Bauanordnung nach einem der Ansprüche 1 bis 9, die aus Wandelementen aus mit leitfähigen Teilchen geladenem Beton mit einem leitfähigen Gitter aufgebaut ist, das eine Abschirmung gegen elektromagnetische Strahlung ausbildet, **dadurch gekennzeichnet, dass** auf wenigstens einer der Flächen eines Wandelements, das aus mit leitfähigen Teilchen geladenem Beton ohne leitfähiges Gitter gefertigt ist, eine Außenschicht aufgebracht wird, die ein leitfähiges Gitter umfasst, das Maschen von weniger als 30 x 30 Millimeter aufweist.

11. Verfahren zum Herstellen einer Bauanordnung nach dem vorhergehenden Anspruch, **dadurch gekennzeichnet, dass** die Außenschicht aus einem Gitter besteht, das in ein Oberflächenmaterial eingebettet ist.

## Claims

1. Architectural assembly composed of wall elements made of concrete filled with conductive particles, with a conductive mesh forming shielding against electromagnetic radiation, where said wall elements consist of a panel 1 of concrete filled with conductive particles, said panel having no conductive mesh for electromagnetic shielding, **characterized in that** at least one of the faces is provided with a skin 2, 3 consisting of a conductive mesh for electromagnetic shielding, which mesh is embedded or not embedded in a finishing material, said conductive mesh having meshes of less than 30 x 30 millimeters.

2. Architectural assembly according to claim 1, **characterized in that** said conductive mesh is secured to at least one of the surfaces of said panel 1 of concrete filled with conductive particles.

3. Architectural assembly according to claim 1, **characterized in that** said conductive mesh is embedded in a finishing material.

4. Architectural assembly according to claim 1, **characterized in that** the concrete contains between 0.5 and 2 wt.% of conductive particles.

5. Architectural assembly according to claim 1, **characterized in that** the concrete has a resistivity of less than 300 Ohm·meter.

6. Architectural assembly according to claim 1, **characterized in that** the concrete is filled with conductive particles having a length of between 5 and 15 millimeters and a section of between 0.1 and 0.5 millimeters.

7. Architectural assembly according to claim 1, **characterized in that** the openings in the panel 1 are surrounded by a metal conductive sheath.

8. Architectural assembly according to the preceding claim, **characterized in that** said sheaths are secured to the wall by screws that are engaged in tapped holes to provide mechanical and electrical connection to the mesh and the concrete filled with conductive particles.

9. Architectural assembly according to claim 1, **characterized in that** said wall elements are connected by expansion joints made of a conductive material, which joints are secured to the peripheral regions of the two elements connected by concrete screws or nails to provide mechanical and electrical connection to the mesh and the concrete filled with conductive particles.

10. Method for constructing an architectural assembly according to any of claims 1 to 9 composed of wall elements made of concrete filled with conductive particles, with a conductive mesh forming shielding against electromagnetic radiation, **characterized in that** a skin comprising a conductive mesh having meshes of less than 30 x 30 millimeters is deposited on at least one of the faces of a wall element that is made of concrete filled with conductive particles and has no conductive mesh.

11. Method for constructing an architectural assembly according to the preceding claim, **characterized in that** said skin consists of a mesh embedded in a finishing material.

Fig. 1

Fig. 2

Fig. 3

Fig. 4

Fig. 5

Fig. 6

## RÉFÉRENCES CITÉES DANS LA DESCRIPTION

**Documents brevets cités dans la description**

- WO 2012114448 A
- CN 103903665
- JP H01302897 B
- WO 2014210007 A
- JP H05222785 B
- US 5908584 A
- EP 0745061 A